# EUROPEAN PATENT SPECIFICATION

(11) **EP 2 423 094 B1**
(45) Date of publication and mention of the grant of the patent: **02.04.2014**
(21) Application number: 11177521.9
(22) Date of filing: 12.08.2011
(51) Int. Cl.: B60K 17/04, B62M 6/90, B62M 6/65, B62M 7/00, B60K 1/04, B60K 7/00

(54) **Electric wheel for electric vehicles**
Elektrisches Rad für elektrische Fahrzeuge
Roue électrique pour véhicules électriques

(30) Priority: 31.08.2010 TW 099129294; 11.03.2011 TW 100108216
(43) Date of publication of application: 29.02.2012
(73) Proprietor: Lo, Chiu-Hsiang, Tan-Tz Taichung (TW)
(72) Inventor: Lo, Chiu-Hsiang, Tan-Tz Taichung (TW)
(74) Representative: Lang, Christian

(56) References cited:
- WO-A2-2010/077300
- GB-A- 2 387 825
- US-A1- 2003 213 630

## Description

### FIELD OF THE INVENTION

The present invention relates to an electric wheel for electric vehicles, and more particularly, to a wheel equipped with battery and hub motor and the wheel is directly connected to the vehicle without wires extending from the vehicle frame.

### BACKGROUND OF THE INVENTION

There are different types of driving mechanisms for electric vehicles and the hub motors are developed to improve the shortcomings of the conventional driving mechanism which require long transmission system and are not suitable for electric wheeled chairs and electric bicycles. The conventional hub motors are disclosed in U.S. Pat. No. 3,897,843, 4,346,777, 4,913,258, 5,450,915, 5,465,802, 5,600,191, 6,321,863, and 7,719,412, and applicant owned U.S. Pat. No. 6,974,399. All of the disclosures relate to the use of electric motor directly driving the wheels.

Most of the conventional wheels of the electric vehicles include a hub motor only and the battery for providing power to the hub motor is installed to the vehicle frame. In other words, the battery and the hub motor are separately connected to the frame and the wheel. In order to provide power to the hub motor from the battery, the coil unit is fixed to the shaft of the wheel and a hole is drilled from the periphery of the shaft so that the hole extends axially along the shaft. The wires are electrically connected between the coil unit and the battery via the hole. The battery is usually bulky and heavy so that the battery has to be connected to the strong portion of the frame such as the seat tube or the carriage rack. Therefore, the wires have to extend a long distance along the frame and this obviously cannot achieve the aesthetic purpose and requires a significant time to position the wires. In addition, the hole in the shaft may weaken the structure of the shaft.

Some wheels are equipped with power generating members which operate only when the wheels rotate and are not designed for directly providing electric power to the rotation of the wheels. In other words, when the wheels are stationary or the vehicles brake, the kinetic energy is transferred into electric power is stored in the battery attached to the vehicle frame.

The conventional hub motors are complicated and do not have battery directly equipped on the rim. The time required to set the wires and the exposed wires affect the aesthetic purpose of the vehicles. The present invention intends to provide an electric wheel to improve the shortcomings of the conventional wheels.

WO 2010/77300 A2 discloses an electric wheel including a tire, a rim, spokes and a center portion arranged at the center of the electric wheel, the center portion accommodating the motor and the batteries. However, the design and arrangement of the center portion has the disadvantage that the weight of the batteries is accumulated in the center and that the wheel has a high wind resistance.

### SUMMARY OF THE INVENTION

The above mentioned object of the present invention is solved by the electric wheel according to claim 1. Advantageous improvements of the electric wheel are described by the dependant claims.

The first object of the present invention is to provide an electric wheels for electric vehicles and the electric wheel is equipped with the battery and the hub motor and can be directly connected to the vehicle frame without extra wires connected to the vehicle frame so as to have an aesthetic outer appearance for the vehicle. The electric wheel includes a rim having multiple connecting members connected to an inside of the rim. A hub motor is located at the center of the rim and includes a central unit, a rotor and a stator. The central unit has two ends thereof fixed to a vehicle frame and a battery and a control device are connected to the rim. The control device receives a wireless command signal and generates a control signal to control the battery to provide power to the hub motor.

The second object of the present invention is to provide an electric wheel with highly structural strength and includes a battery fixed to the connecting member of the rim and located outside of the hub motor. The wires for the battery and the coil unit do not extend through the central unit and are directly connected between the battery and the hub motor. The central unit does not need to be drilled so as to have better structural strength.

The third object of the present invention is to provide an electric wheel with sufficient electric power and includes multiple boxes and each box receives multiple batteries. The boxes are connected to the connecting members and extend along radial direction of the rim.

The fourth object of the present invention is to provide an electric wheel wherein each connecting member is a board-like connecting member and respective second ends of the connecting member are connected to each other to form a star-shaped arrangement. A recess is defined in a surface of each connecting member and a box is engaged with the recess. At least one battery is located in the recess. A star-shaped cover is connected to the connecting members to seal the recesses and positions the casing.

The fifth object of the present invention is to provide an electric wheel with power supply and hub motor having superior transmission efficiency, wherein the wheel includes a rim equipped with battery and a hub motor. The hub motor includes a casing, a ring gear, a stator, a central unit, a rotor, a sun gear, a planet gear frame and multiple planet gears. The stator includes a tube and the central unit extends through the stator which is rotatable with respect to the central unit. The magnet unit of the stator is mounted to the tube. The rotor includes a coil unit which is fixed to an inside of a casing and located around the magnet unit. The sun gear is connected to the first end of the tube. The gear ring is fixed to the casing. The central unit has a planet gear frame connected thereto which is connected with multiple planet gears. The planet gears are engaged with the sun gear and the gear ring. The central unit includes a first fixed axle and a second fixed axle which is connected to the first fixed axle. The first fixed axle extends through the tube and the planet gear frame is mounted to the second fixed axle. The bearing on the cap is mounted to the second fixed axle.

The sixth object of the present invention is to provide an electric wheel with power supply and hub motor having superior transmission efficiency, wherein the wheel includes a rim equipped with battery and a hub motor. The hub motor includes a casing, a ring gear, a stator, a central unit, a rotor, a sun gear, a planet gear frame and multiple planet gears. The ring gear and the coil unit of the rotor are fixed in the casing which is rotatable relative to the central unit. The central unit includes a first fixed axle, a second fixed axle and a shaft which is rotatable relative to the casing. The magnet unit of the stator and the sun gear are fixed to the shaft. The planet gear frame is fixed to the first fixed axle by a one-way bearing and multiple planet gears are connected to the planet gear frame. The planet gears are engaged with the sun gear and the ring gear.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view to show the rim and the hub motor of the present invention;

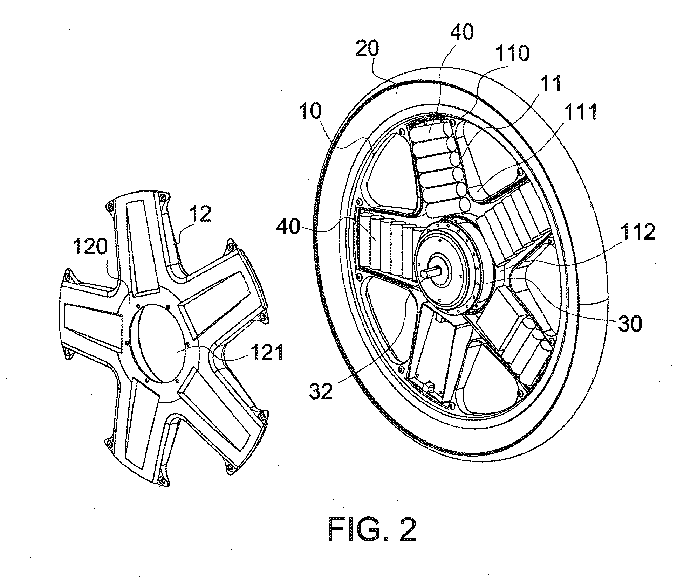

Fig. 2 is a perspective view to show the rim and the assembled hub motor of the present invention;

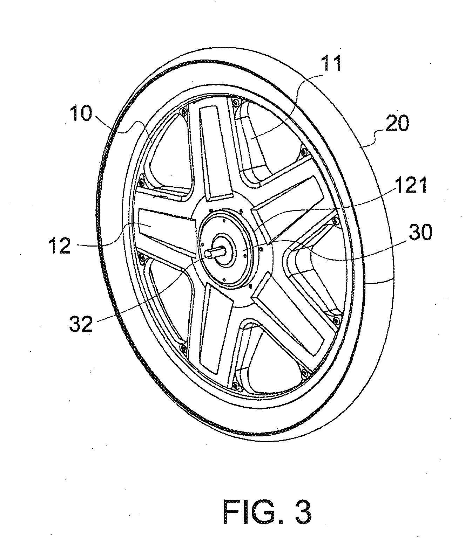

Fig. 3 is a perspective view to show electric wheel composed of the rim and the hub motor of the present invention;

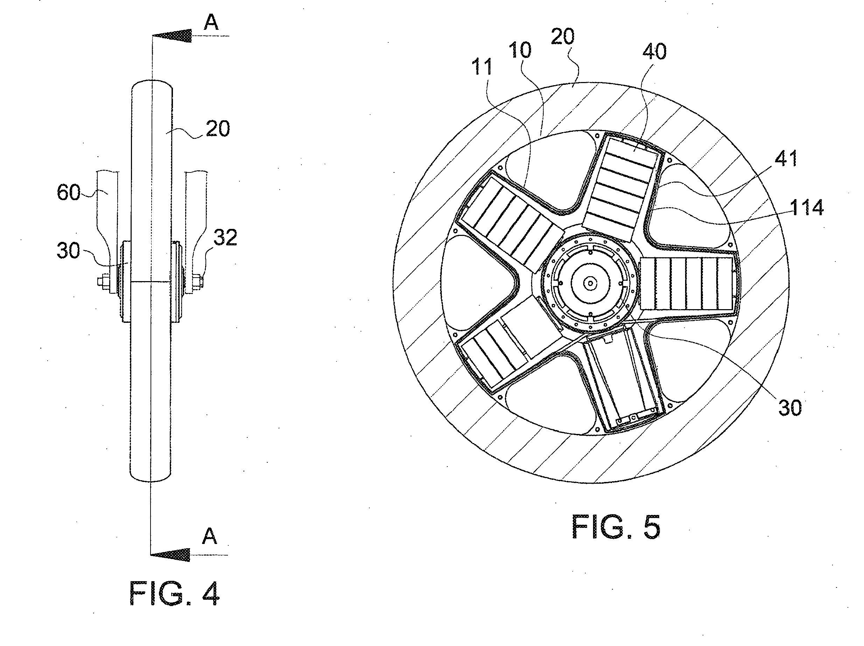

Fig. 4 is a front view of the electric wheel of the present invention;
Fig. 5 is a cross-sectional view taken along line A-A of Fig. 4;

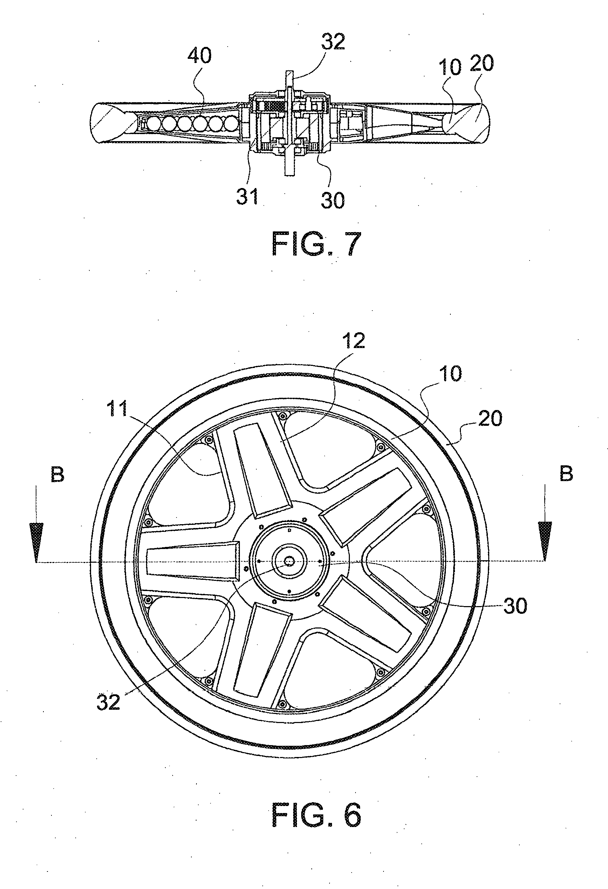

Fig. 6 is a side view of the electric wheel of the present invention;
Fig. 7 is a cross-sectional view taken along line B-B of Fig. 6;
Fig. 8 is an exploded view of the first embodiment of the hub motor of the present invention;

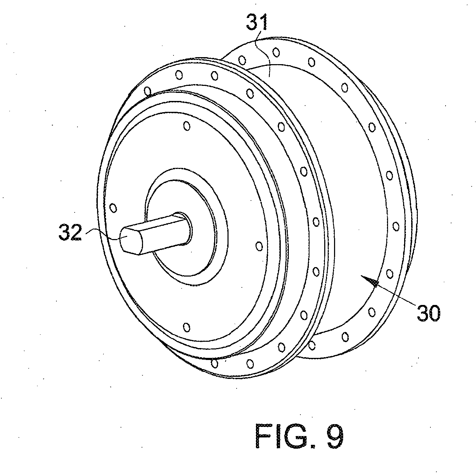

Fig. 9 is a perspective view of the first embodiment of the hub motor of the present invention;
Fig. 10 is a partial cross sectional of the first embodiment of the hub motor of the present invention;
Fig. 11 shows the front view of the first embodiment of the hub motor of the present invention;
Fig. 12 is a cross-sectional view taken along line C-C of Fig. 11;
Fig. 13 is an exploded view to show the second embodiment of the hub motor of the present invention;
Fig. 14 is a perspective view to show the second embodiment of the hub motor of the present invention;
Fig. 15 is a perspective view, partly removed, of the second embodiment of the hub motor of the present invention;
Fig. 16 is a side view of the second embodiment of the hub motor of the present invention, and
Fig. 17 is a cross sectional view, taken along line C-C in Fig. 16.

### DETAILED DESCRIPTION OF THE PREFERRED EMBODIMENT

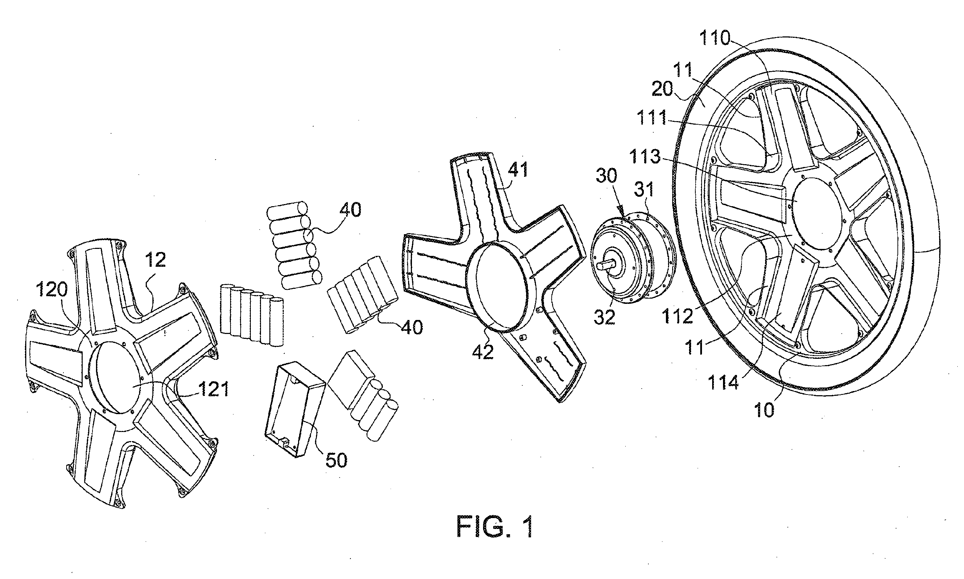

To achieve the first purpose of the present invention, referring to Figs. 1∼8, the electric wheel of the present invention comprises a rim 10 having a tire 20 connected to an outer periphery thereof and multiple connecting members 11 are connected to an inside of the rim 10. Each connecting member 11 has a first end 110 and a second end 111 which is located in opposite to the first end 110. The respective second ends 111 of the connecting members 11 extend toward the center of the rim 10 and form a star-shaped portion in radial direction of the rim 10.

A hub motor 30 has a cylindrical casing 31 and a central unit 32 extends through the central axis of the casing 31. A rotor 33 and a stator 34 are respectively mounted to the casing 31 and the central unit 32. The rotor 33 has a coil unit 330 mounted thereto and the stator 34 has a magnet unit 340 connected thereto. The casing 31 is fixed to the center of the rim 10 and two ends of the central unit 32 are fixed to the vehicle frame 60.

At least one battery 40 is fixed to the rim 10 so as to provide power to the hub motor 30.

A control device 50 is fixed to the rim 10 and receives a wireless command signal and generates a control signal to control the at least one battery 40 to provide power to the hub motor 30, and to allow the rotor 33 to rotate about the stator 34 and to allow the rim 10 to rotate about the central unit 32.

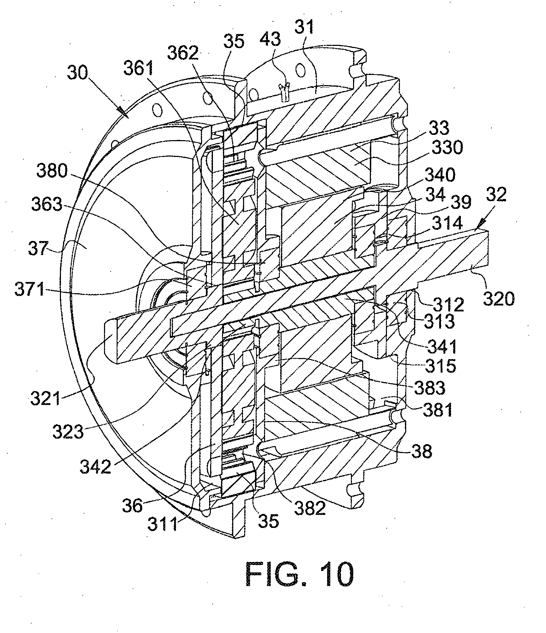

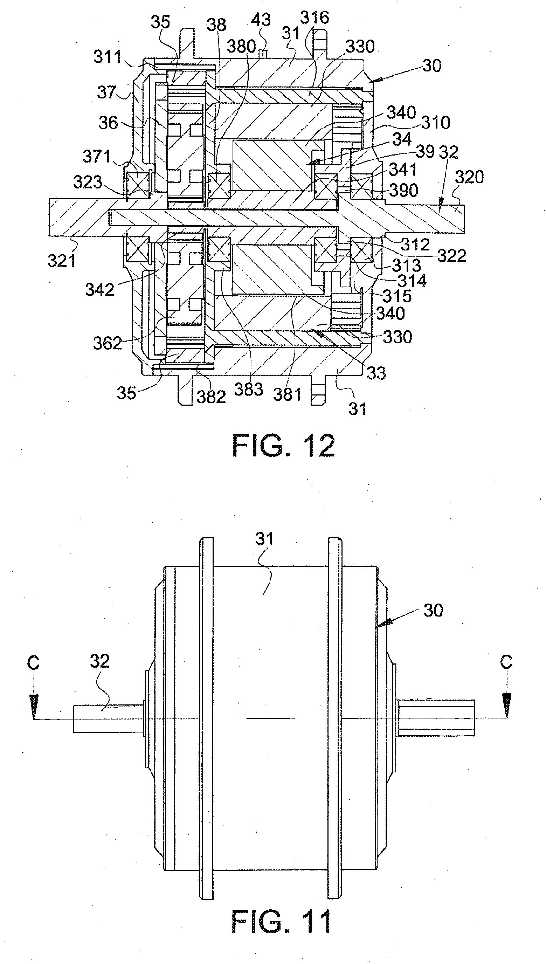

To achieve the second purpose of the present invention, referring to Figs. 1, 8 and 12, the electric wheel of the present invention comprises a rim 10, multiple connecting members 11, a hub motor 30, at least one battery 40 and a control device 50. The at least one battery 40 is fixed to the connecting members of the rim 10 and located outside of the hub motor 30. The wires 43 connected between the at least one battery 40 and the coil unit 330 do not extend through the central unit 32, and are directly connected between the at least one battery 40 and the coil unit 330. As shown in Fig. 10, the wires 43 extend through the casing 31. The central unit 32 does not have any hole drilled therethrough so as to increase its structural strength.

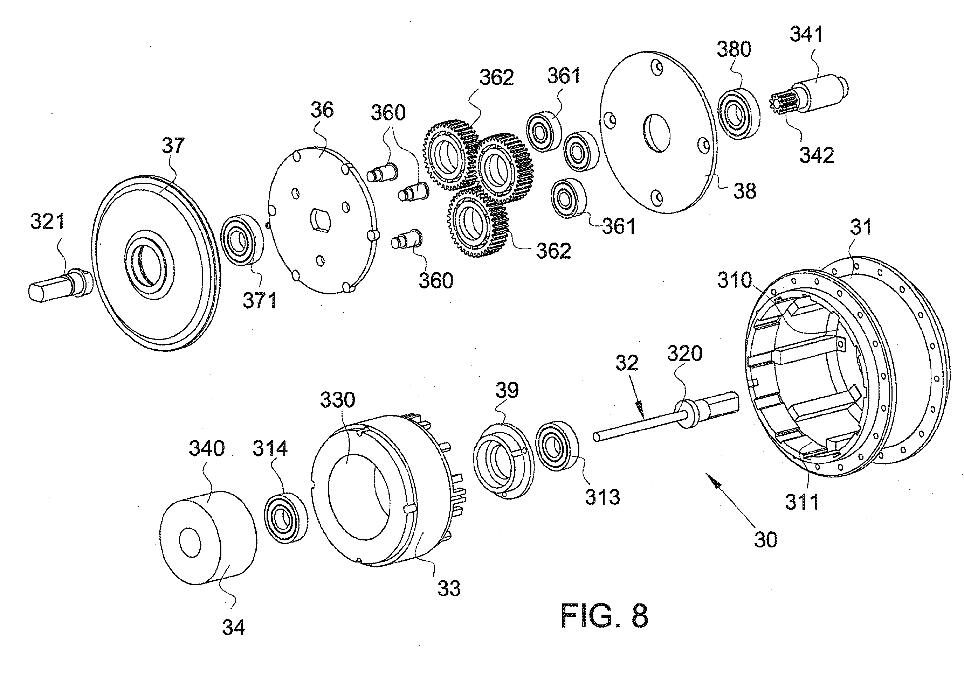

To achieve the third purpose of the present invention, referring to Figs. 1 and 8, the electric wheel of the present invention comprises a rim 10, multiple connecting members 11, a hub motor 30, at least one battery 40 and a control device 50. The at least one battery 40 includes multiple batteries 40 and are cooperated with multiple boxes 41. Each box 41 accommodates multiple batteries 40. The boxes 41 are connected to the connecting members 11 which are located in radial direction of the rim 10.

To achieve the fourth purpose of the present invention, referring to Figs. 1 and 8, the electric wheel of the present invention comprises a rim 10, multiple connecting members 11, a hub motor 30, at least one battery 40 and a control device 50. There are multiple boxes 41. The connecting members 11 each is a board-like member and the respective second ends 111 of the connecting members 11 are connected to each other to form a first fixing portion 112 which is a star-shaped portion and extend in radial direction of the rim 10. The first fixing portion 112 positions the casing 31. The hub motor 30 has a first hole 113 in a center thereof and the central unit 32 extends through the first hole 113. Each connecting member 11 has a recess 114 defined in a surface thereof and the box 41 is received in the recess 114. Each box 41 receives at least one battery 40.

As shown in Fig. 1, the boxes 41 are connected to each other to form as a star-shaped combination and a circular hole 42 is defined in a center of the star-shaped combination. The hub motor 30 extends through the circular hole 42. The multiple batteries 40 are arranged in radial direction of the rim 10. A star-shaped cover 12 is connected to the inside of the rim 10 and connected to the connecting members 11 so as to seal the recesses 114. The cover 12 has a second fixing portion 120 at a center thereof and the casing 31 is fixed to the second fixing portion 120. The second fixing portion 120 has a second hole 121 defined centrally therethrough and the central unit 32 extends through second hole 121.

To achieve the fifth purpose of the present invention, referring to Figs. 1 and 8∼12, the electric wheel of the present invention comprises a rim 10, multiple connecting members 11, a hub motor 30, at least one battery 40 and a control device 50. The stator 34 includes a tube 341 and a magnet unit 340. The tube 341 is rotatably mounted to the central unit 32 and the magnet unit 340 is fixed to an outside of a mediate portion of the tube 341. The rotor 33 includes a coil unit 330 which is fixed to the inside of the casing 31 and located around the magnet unit 340. The coil unit 330 is not in contact with the magnet unit 340. A sun gear 342 is connected to the first end of the tube 341. A gear ring 35 is fixed to the casing 31. The central unit 32 has a planet gear frame 36 connected thereto which is connected with multiple planet gears 362 by multiple pivots 360 and bearings 361. The planet gears 362 are located around the sun gear 342 at even central angle. The planet gears 362 are located in side of the gear ring 35 and engaged with the sun gear 342 and the gear ring 35. The rotor 33 has the coil unit 330 and is fixed to the casing 31 which is integrally connected to the rim 10. The rim 10 has batteries 40 connected thereto, and the batteries 40 and the coil unit 330 are co-rotatable with the rotation of the rim 10. Therefore, the wires 43 are directly connected to the batteries 40 and the hub motor 30, and both can be directly connected to the rim 10. Moreover, the casing 31 has a closed portion 310 at a first end thereof and an opening 311 is defined in a second end of the casing 31. The closed portion 310 has a passage 312 defined centrally therethrough and two bearings 313, 314 are co-axially connected to the passage 312 in the closed portion 310. One of the two bearings 313 is mounted to the central unit 32 and the other one of the two bearings 314 is mounted to the tube 341. The closed portion 310 has a flange 315 located at the passage 312 and the flange 315 has a bearing cage 39. A bearing 313 is located within the flange 315 and the bearing 314 is connected to the bearing cage 39. A cap 37 is mounted to the opening 311 and a bearing 371 is connected to the cap 37. The bearing 371 is mounted to the central unit 32. A separation board 38 is located in the casing 31 and an annular flange 383 is connected to the separation board 38 so as to receive the bearing 380. The tube 341 extends through the bearing 380 and the central unit 32 extends through the tube 341. The separation board 38 and the closed portion 310 define a first chamber 381 therebetween, and the separation board 38 and the cap 37 define a second chamber 382 therebetween. The sun gear 342, the planet gear frame 36, the planet gears 362 and the gear ring 35 are received in the second chamber 382. The rotor 33 and the stator 34 are received in the first chamber 381. The central unit 32 includes a first fixed axle 320 and a second fixed axle 321 which is connected to the first fixed axle 320. The first fixed axle 320 extends through the tube 341 and the planet gear frame 36 is mounted to the second fixed axle 321. The bearing 371 on the cap 37 is mounted to the second fixed axle 321. Bolts 316 are connected between the separation board 38 and the closed portion 310, and the coil unit 33 is fixed by the bolts 316.

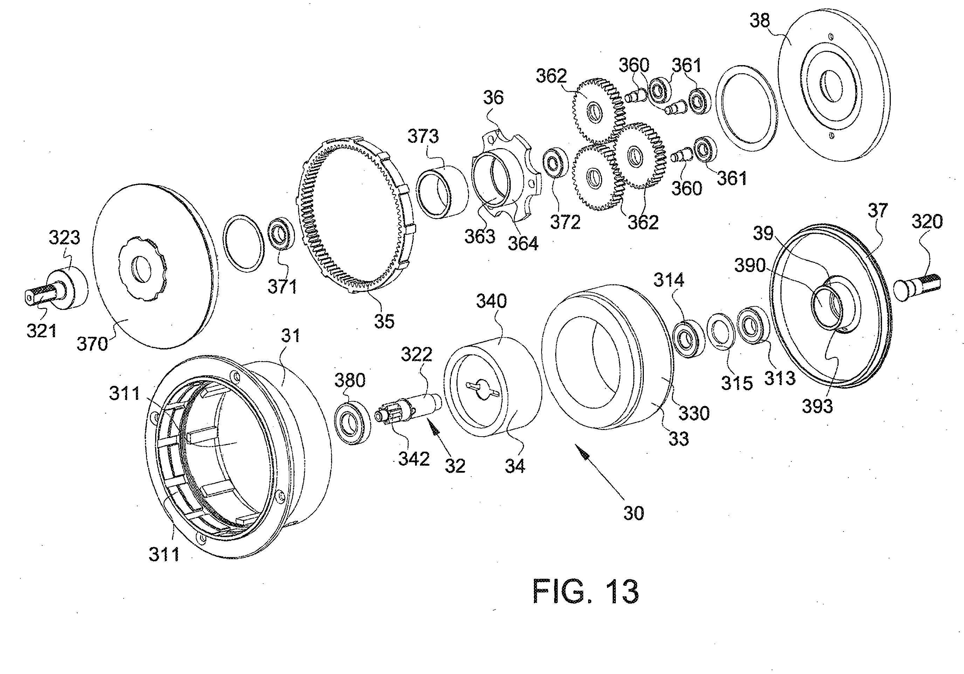

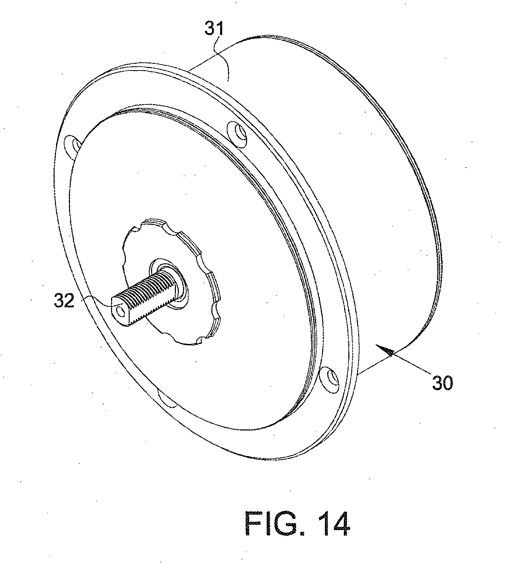

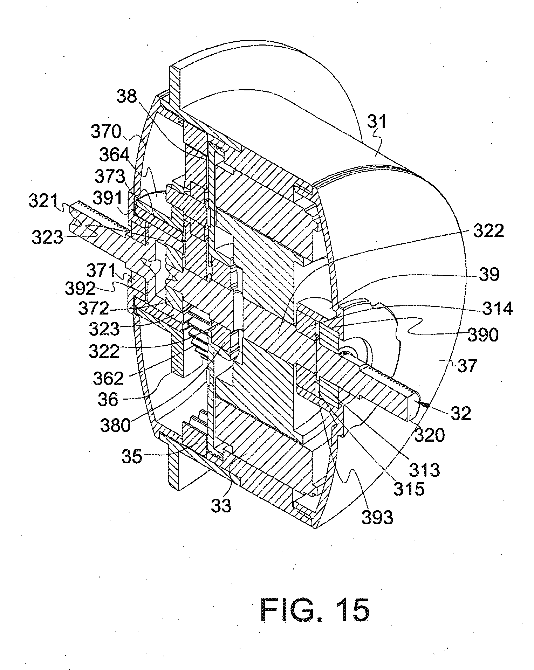

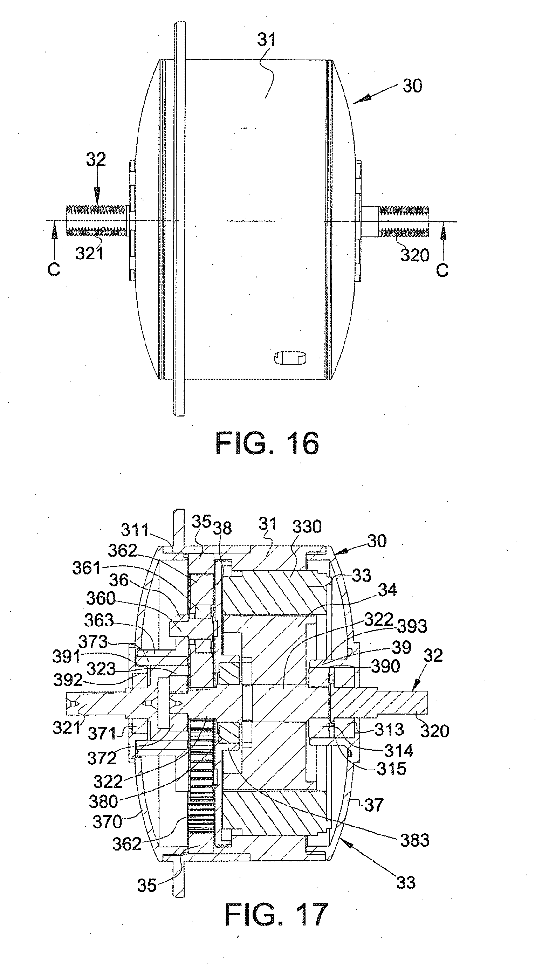

To achieve the sixth purpose of the present invention, referring to Figs. 1 and 13~17, the electric wheel of the present invention comprises a rim 10, multiple connecting members 11, a hub motor 30, at least one battery 40 and a control device 50. The hub motor 30 of the present invention is connected to and drives the wheel 20 of an electric vehicle, and the hub motor 30 comprises a cylindrical casing 31 which is connected to the wheel 30, a ring gear 35 fixed in the casing 31, a coil unit 33 fixed on the casing 31, and a central unit 32 extending along an axis of the casing 31. The central unit 32 has a first fixed axle 320, a second fixed axle 321 and a shaft 322. The first and second fixed axes 320, 321 each have two opposite ends. The first end of the first fixed axle 320 and the second end of the second fixed axle 321 are respectively connected to the electric vehicle, such as the front fork or the chain stays of an electric bicycle. A first bearing 313 is located between the first fixed axle 320 and the casing 31, and a second bearing 371 is located between the second fixed axle 321 and the casing 31. Therefore, the casing 31 is rotatable relative to the first fixed axle 320, the second fixed axle 321 and the whole central unit 32. The shaft 322 has a first end and a second end. A sun gear 342 and a magnet unit 340 of the stator 34 are mounted to the shaft 322. A third bearing 314 and a fourth bearing 380 are located between the shaft 322 and the casing 31. The casing 31 is rotatable relative to the shaft 322. The shaft 322 is located co-axially with the first fixed axle 320 and the second fixed axle 321. The shaft 322 is rotatable relative to the first fixed axle 320 and the second fixed axle 321. The magnet unit 34 is located corresponding to the coil unit 330 so that the coil unit 330 is not in contact with the magnet unit 340. A planet gear frame 36 is a star-shaped frame and co-axially and rotatably mounted to the central unit 32, and the planet gear frame 36 rotatable relative to the central unit 32 in one direction only. The planet gear frame 36 includes a first end surface and a second end surface, the first end surface has three pivots 360 which are located at even angular distance and each pivot 360 is connected with a planet gear 362 with a bearing 361 located therebetween. The planet gears 362 are located within the ring gear 35 and engaged with the sun gear 342 and the ring gear 35. Moreover, the magnet unit 340 is connected to the mediate portion of the shaft 322 and the sun gear 342 is fixed to the shaft 322 and located close the to the second end surface of the shaft 322. The casing 31 has a ring gear 35 fixed to the inside thereof. The second end surface of the planet gear frame 36 has a first sleeve 364 extending axially therefrom and the first sleeve 364 is located around the first end of the second fixed axle 321 and has a one-way bearing 373 connected thereto. The planet gear frame 36 is rotatable relative to the second fixed axle 321 and the central unit 32 in only one direction by the one-way bearing 373. Moreover, the first end of the second fixed axle 321 and the second end of the shaft 322 is connected to each other by a fifth bearing 372. The first end of the second fixed axle 321 has a second sleeve 323 connected thereto. The second sleeve 323 is located around the second end of the shaft 322 and the first sleeve 364 is mounted to the second sleeve 323. The fifth bearing 372 is located between the second sleeve 323 and the second end of the shaft 322. The shaft 322 properly supports the second fixed axle 321 by the fifth bearing 372, so that the second fixed axle 321 supports the one-way bearing 373, the planet gear frame 36 and the planet gears 362. Besides, two ends of the casing 31 have an opening 311 respectively, wherein a first closing member 37 and a second closing member 370 respectively seal the two openings 311. A separation board 38 is located in the mediate portion of the casing 31. The first closing member 37 has a first bearing seat 39 fixed to the center thereof. The first bearing seat 39 has a third sleeve 393 extending from an end thereof and the third sleeve 393 has an open end so as to define a first room 390 which receives the first and third bearings 313, 314. The second closing member 370 has a second bearing seat 391 connected to the center thereof and the second bearing seat 391 has a second room 392 in which the second bearing 371 is received. The separation board 38 is located in the casing 31 and has an annular flange 383 for receiving a fourth bearing 380. The first bearing 313 is mounted to the first fixed axle 320 and the second bearing 371 is mounted to the second fixed axle 321. The first and second fixed axes 320, 321 respectively extend through the first closing member 37 and the second closing member 370. The third bearing 314 and the fourth bearing 380 are mounted to the shaft 322 which extends through the separation board 38. The magnet unit 34 is located between the third bearing 314 and the fourth bearing 380. The fourth bearing 380 is located between the magnet unit 34 and the sun gear 342. The first bearing seat 39 has a third sleeve 393 extending from an end thereof. The third sleeve 393 includes an open end so as to form the first room 390 which receives the first bearing 313, a washer 315 and the third bearing 314. The washer 315 separates the first bearing 313 from the third bearing 314.

There are several advantages of the present invention and which are:
1. The electric wheel of the electric vehicle is equipped with the power supply to obtain a complete and integral structure, and can be easily installed to the electric vehicles. There will be no messy wires and control cables located on the vehicle frame.
2. The batteries 40 are fixed to the connecting members 11 of the rim 10 and located around the hub motor 30. The wires 43 of the batteries 40 and the coil unit 33 do not pass through the central unit 32 and directly extend through the casing 31. Therefore the central unit 32 does not need to be drilled and the structural strength is reinforced.
3. The present invention has multiple batteries 40 and boxes 41 which are fixed to the connecting members 11 and located in radial direction of the rim 10. The batteries 40 provide sufficient electric power to the hub motor 30.
4. Each connecting member 11 is a board-like connecting member and has a recess 114 for receiving the box 41 in which the batteries 40 are received. The star-shaped cover 12 is used to cover all of the recesses 114 and position the casing 31 to simply the steps of assembling.
5. The present invention has a simple structure including the rim 10, the batteries 40 and the hub motor 30, so that the present invention can easily connected to the electric vehicles.
6. In one embodiment of the hub motor of the present invention, the casing 31 of the hub motor 30 includes the closed portion 310 and the opening 311. The opening 311 is covered by the cap 37 and the separation board 38 is located in the casing 31 so as to accommodate the sun gear 342, planet gear frame 36, the planet gears 362, the gear ring 35, the rotor and the stator. The central unit 32 is composed of the first fixed axle 320 and the second fixed axle 321, both of which are pivotably connected to the components mentioned above. The assembly is easy and systematical.
7. In another embodiment of the hub motor of the present invention, the structure of the hub motor of the present invention is simplified so as to be easily cooperated with electric vehicles. The central unit of the hub motor includes the first fixed axle, the second fixed axle and the shaft, and the one-way bearing is located between the planet gear frame and the second fixed axle, so that the whole system is simplified and easily to be assembled. The fifth bearing is located between the second fixed axle and the shaft to provide stable support to the hub motor.

While we have shown and described the embodiment in accordance with the present invention, it should be clear to those skilled in the art that further embodiments may be made without departing from the scope of the present invention.

## Claims

1. An electric wheel for electric vehicles, comprising:
a rim (10) having a tire (20) connected to an outer periphery thereof and multiple connecting members (11) connected to an inside of the rim (10), each of the multiple connecting members (11) being a board-like member and having a first end (110) being fixed to the inside of the rim (10) and a second end (111) extending toward a center of the rim (10) and connecting to each other to form a first fixing portion (112) which is a star-shaped portion; and
a hub motor (30) located at the center of the rim (10) and having a central unit (32), a rotor (33) and a stator (34), the central unit (32) located on an central axis of the rim (10) and two ends of the central unit (32) adapted to be fixed to a vehicle frame (60), the rim (10) having multiple batteries (40) and a control device (50) connected thereto, the control device (50) receiving a wireless command signal and generating a control signal to control the battery (40) to provide power to the hub motor (30), and to allow the rotor (33) to rotate about the stator (34) and to allow the rim (10) to rotate about the central unit (32);
wherein the multiple batteries (40) being connected to multiple boxes (41) - respectively, each box (41) having multiple batteries (40) received therein, each box (41) being fixed to one connecting member (11) of the rim (10) and located outside of the hub motor (30), each connecting member (11) having a recess (114) defined in a surface thereof and the box (41) being received in the recess (114); the boxes (41) being connected to each other to form as a star-shaped combination and a circular hole (42) being defined in a center of the star-shaped combination, the hub motor (30) extending through the circular hole (42), the boxes (41) being located in radial directions of the rim (10), respectively.

2. The electric wheel as claimed in claim 1, wherein wires electrically connected between the hub motor (30) and the batteries (40) are provided, the wires do not extend into the central unit (32) and are directly connected between the batteries (40) and the hub motor (30).

3. The electric wheel as claimed in claim 1, wherein the first fixing portion (112) positions the hub motor (30) and has a first hole (113) in a center thereof, the central unit (32) extends through the first hole (113).

4. The electric wheel as claimed in claim 1, wherein a star-shaped cover (12) is connected to the inside of the rim (10) and connected to the connecting members (11) so as to seal the recesses (114), the cover (12) has a second fixing portion (120) at a center thereof and the hub motor (30) is fixed to the second fixing portion (120), the second fixing portion (120) has a second hole (121) defined centrally therethrough and the central unit (32) extends through second hole (121).

5. The electric wheel as claimed in claim 1, wherein the hub motor (30) includes a casing (31), a ring gear (35), a sun gear (342), a planet gear frame (36) and multiple planet gears (362); the stator (34) includes a tube (341) and a magnet unit (340), the tube (341) includes a first end and a second end which is located in opposite to the first end, the tube (341) is rotatably mounted to a mediate portion of the central unit (32), the magnet unit (340) is fixed to an outside of a mediate portion of the tube (341), the rotor (33) includes a coil unit (330) which is fixed to an inside of a casing (31) and located around the magnet unit (340), a sun gear (342) is connected to the first end of the tube (341), a gear ring (35) is fixed to the casing (31), the central unit (32) has a planet gear frame (36) connected thereto which is connected with multiple planet gears (362), the planet gears (362) are located around the sun gear (342) at even central angle, the planet gears (362) are located in side of the gear ring (35) and engaged with the sun gear (342) and the gear ring (35).

6. The electric wheel as claimed in claim 5, wherein the casing (31) has a closed portion (310) at a first end thereof and an opening (311) is defined in a second end of the casing (31), two bearings (313, 314) are co-axially connected to the closed portion (310), one of the two bearings (313) is mounted to the central unit (32) and the other one of the two bearings (314) is mounted to the tube (341), a cap (37) is mounted to the opening (311) and a beating (371) is connected to the cap (37), the bearing (371) is mounted to the central unit (32), a separation board (38) is located in the casing (31), the separation board (38) and the closed portion (310) define a first chamber (381) therebetween, the separation board (38) and the cap (37) define a second chamber (382) therebetween, the sun gear (342), the planet gear frame (36), the planet gears (362) and the gear ring (35) are received in the second chamber (382), the rotor (33) and the stator (34) are received in the first chamber (381), a bearing (380) is connected to the separation board (38) and mounted to the tube (341).

7. The electric wheel as claimed in claim 6, wherein the central unit (32) includes a first fixed axle (320) and a second fixed axle (321) which is connected to the first fixed axle (320), the first fixed axle (320) extends through the tube (341) and the planet gear frame (36) is mounted to the second fixed axle (321), the bearing (371) on the cap (37) is mounted to the second fixed axle (321).

8. The electric wheel as claimed in claim 1, wherein the hub motor (30) includes a casing (31) being adapted to be fixed to the rim (10), a ring gear (35), a sun gear (342), a planet gear frame (36) and multiple planet gears (362); the central unit (32) extends along an axis of the casing (31), and has a first fixed axle (320), a second fixed axle (321) and a shaft (322); the first fixed axle (320) has a first end and a second end, the first end of the first fixed axle (320) is adapted to be fixed to the vehicle frame (60), a first bearing (313) located between the first fixed axle (320) and the casing (31), the casing (31) is rotatable relative to the first fixed axle (320); a coil unit (330) of the rotor (33) being fixed on the casing (31); a ring gear (35) fixed in the casing (31); the second fixed axle (321) having a first end and a second end, the second end of the second fixed axle (321) adapted to be fixed to the vehicle frame (60), a second bearing (371) located between the second fixed axle (321) and the casing (31), the casing (31) rotatable relative to the second fixed axle (321); the shaft (322) located co-axially with the first and second fixed axes (320) (321), the shaft (322) having a first end and a second end, the sun gear (342) and a magnet unit (340) of the stator mounted to the shaft (322), a third bearing (314) and a fourth bearing (380) located between the shaft (322) and the casing (31), the casing (31) rotatable relative to the shaft (322), the shaft (322) is located co-axially with the first fixed axle (320) and the second fixed axle (321), the shaft (322) rotatable relative to the first fixed axle (320) and the second fixed axle (321); the planet gear frame (36) co-axially and rotatably mounted to the central unit (32), the planet gear frame (36) rotatable relative to the central unit (32) in one direction only and having a first end surface and a second end surface, the first end surface having multiple planet gears (362) rotatably connected thereto, the planet gears (362) engaged with the ring gear (35) and the sun gear (342).

9. The electric wheel as claimed in claim 8, wherein the second end surface of the planet gear frame (36) has a first sleeve (364) extending axially therefrom and the first sleeve (364) located around the first end of the second fixed axle (321) and has a one-way bearing (373) connected thereto, the planet gear frame (36) is rotatable relative to the second fixed axle (321) and the central unit (32) in only one direction by the one-way bearing (373).

10. The electric wheel as claimed in claim 8, wherein the first end of the second fixed axle (321) and the second end of the shaft (322) is connected to each other by a fifth bearing (372).

11. The electric wheel as claimed in claim 10, wherein the first end of the second fixed axle (321) has a second sleeve (323) connected thereto, the second sleeve (323) is located around the second end of the shaft (322), the fifth bearing (372) is located between the second sleeve (323) and the second end of the shaft (322).

12. The electric wheel as claimed in claim 8, wherein a first closing member (37) and a second closing member (370) are located on two ends of the casing (31), a separation board (38) is located in a mediate portion of the casing (31), the first closing member (37) has a first bearing seat (39) fixed thereto, the first bearing seat (39) has a first room (390) which receives the first and third bearings (313) (314), the second closing member (370) has the second bearing (371) connected thereto, the separation board (38) has the fourth bearing (380) connected thereto, the first bearing (313) is mounted to the first fixed axle (320) and the second bearing (371) is mounted to the second fixed axle (321), the third bearing (314) and the fourth bearing (380) are mounted to the shaft (322), the magnet unit (340) is located between the third bearing (314) and the fourth bearing (380), the fourth bearing (380) is located between the magnet unit (340) and the sun gear (342).

13. The electric wheel as claimed in claim 12, wherein the first bearing seat (39) has a third sleeve (393) extending from an end thereof, the third sleeve (393) includes an open end so as to form the first room (390), the first room (390) receives the first bearing (313), a washer (315) and the third bearing (314), the washer (315) separates the first bearing (313) atom the third bearing (314).

## Patentansprüche

1. Elektrisches Rad für elektrische Fahrzeuge, das umfasst:
eine Felge (10), die einen Reifen (20), der mit ihrem äußeren Umfang verbunden ist, und eine Vielzahl Verbindungselemente (11) aufweist, die mit einer Innenseite der Felge (10) verbunden sind, wobei jedes aus der Vielzahl der Verbindungselemente (11) ein brettartiges Element ist und ein erstes Ende (110), das an der Innenseite der Felge (10) befestigt ist, und ein zweites Ende (111) aufweist, das sich zu einer Mitte der Felge (10) hin erstreckt und mit den anderen verbunden ist, um einen ersten Befestigungsbereich (112) auszubilden, der ein sternförmiger Bereich ist; und
einen Nabenmotor (30), der an der Mitte der Felge (10) angeordnet ist und der eine Zentraleinheit (32), einen Rotor (33) und einen Stator (34) aufweist, wobei die Zentraleinheit (32) an einer zentralen Achse der Felge (10) angeordnet ist und wobei zwei Enden der Zentraleinheit (32) darauf ausgelegt sind, an einem Fahrzeugrahmen (60) befestigt zu werden, wobei die Felge (10) eine Vielzahl Batterien (40) und eine Steuervorrichtung (50) aufweist, die mit diesen verbunden ist, wobei die Steuervorrichtung (50) ein drahtloses Steuersignal empfängt und ein Steuersignal zum Steuern der Batterie (40) erzeugt, um Energie für den Nabenmotor (30) bereitzustellen und es dem Rotor (33) zu ermöglichen, sich um den Stator (34) zu drehen, und es der Felge (10) zu erlauben, sich um die Zentraleinheit (32) zu drehen,
wobei die Vielzahl Batterien (40) jeweils mit einer Vielzahl Behälter (41) verbunden sind, wobei jeder Behälter (41) viele darin aufgenommene Batterien (40) aufweist, wobei jeder Behälter (41) an einem Verbindungselement (11) der Felge (10) befestigt ist und außerhalb des Nabenmotors (30) angeordnet ist, wobei jedes Verbindungselement (11) eine Ausnehmung (114) aufweist, die in einer Oberfläche davon vorgesehen ist, wobei der Behälter (41) in der Ausnehmung (114) aufgenommen ist, wobei die Behälter (41) miteinander verbunden sind, um in Form eines Sterns mit einem runden Loch (42) ausgebildet zu werden, das in einer Mitte der stemförmigen Anordnungen vorgesehen ist, wobei sich der Nabenmotor (30) durch das runde Loch (42) erstreckt, wobei die Behälter (41) jeweils in der radialen Richtung der Felge (10) angeordnet sind.

2. Elektrisches Rad nach Anspruch 1, wobei Leitungen vorgesehen sind, die elektrisch Nabenmotor (30) und Batterien (40) verbinden, wobei die Leitungen sich nicht in die Zentraleinheit (32) erstrecken und direkt Batterien (40) und Nabenmotor (30) verbinden.

3. Elektrisches Rad nach Anspruch 1, wobei der erste Befestigungsbereich (112) den Nabenmotor (30) positioniert und ein erstes Loch (113) in seiner Mitte aufweist, wobei sich die Zentraleinheit (32) durch das erste Loch (113) erstreckt.

4. Elektrisches Rad nach Anspruch 1, wobei eine sternförmige Abdeckung (12) mit der Innenseite der Felge (10) verbunden ist und mit den Verbindungselementen (11) verbunden ist, um die Ausnehmungen (114) abzudichten, wobei die Abdeckung (12) einen zweiten Befestigungsbereich (120) an ihrer Mitte aufweist und der Nabenmotor (30) an dem zweiten Befestigungsbereich (120) befestigt ist, wobei der zweite Befestigungsbereich (120) ein zweites Loch (121) aufweist, das mittig durch die Zentraleinheit vorgesehen ist, wobei die Zentraleinheit (32) sich durch das zweite Loch (121) erstreckt.

5. Elektrisches Rad nach Anspruch 1, wobei der Nabenmotor (30) ein Gehäuse (31), einen Zahnkranz (35), ein Sonnenrad (342), einen Planetenradrahmen (36) und eine Vielzahl Planetenräder (362) umfasst, wobei der Stator (34) eine Röhre (341) und eine Magneteinheit (340) umfasst, wobei die Röhre (341) ein erstes Ende und ein zweites Ende umfasst, das gegenüberliegend zu dem ersten Ende angeordnet ist, wobei die Röhre (341) drehbar in einem mittleren Bereich der Zentraleinheit (32) montiert ist, wobei die Magneteinheit (340) an einer Außenseite eines mittleren Bereichs der Röhre (341) befestigt ist, wobei der Rotor (33) eine Spuleneinheit (330) aufweist, die an einer Innenseite des Gehäuses (31) befestigt ist und die um die Magneteinheit (340) herum angeordnet ist, wobei das Sonnenrad (342) mit dem ersten Ende der Röhre (341) verbunden ist, wobei der Zahnkranz (35) an dem Gehäuse (31) befestigt ist, wobei die Zentraleinheit (32) den damit verbundenen Planetenradrahmen (36) aufweist, der mit der Vielzahl Planetenräder (362) verbunden ist, wobei die Planetenräder (362) um das Sonnenrad (342) mit gleichmäßigen zentralen Winkeln angeordnet sind, wobei die Planetenräder (362) neben dem Zahnkranz (35) in Eingriff mit dem Sonnenrad (342) und dem Zahnkranz (35) angeordnet sind.

6. Elektrisches Rad nach Anspruch 5, wobei das Gehäuse (31) einen geschlossenen Bereich (310) an seinem ersten Ende und eine Öffnung (311) aufweist, die in einem zweiten Ende des Gehäuses (31) vorgesehen ist, wobei zwei Lager (313, 314) gleichachsig mit dem geschlossenen Bereich (310) verbunden sind, wobei eines der zwei Lager (313) an der Zentraleinheit (32) montiert ist und wobei das andere Lager (316) an der Röhre (341) montiert ist, wobei eine Kappe (37) an der Öffnung (311) montiert ist und wobei ein Lager (371) mit der Kappe (37) verbunden ist, wobei das Lager (371) an der Zentraleinheit (32) montiert ist, wobei eine Trennplatte (38) in dem Gehäuse (31) angeordnet ist, wobei die Trennplatte (38) und der geschlossene Bereich (310) zwischen sich eine erste Kammer (381) definieren, wobei die Trennplatte (38) und die Kappe (37) eine zweite Kammer (382) zwischen sich definieren, wobei das Sonnenrad (342), der Planetenradrahmen (36), die Planetenräder (362) und der Zahnkranz (35) in der zweiten Kammer (382) aufgenommen sind, wobei der Rotor (33) und der Stator (34) in der ersten Kammer (381) aufgenommen sind, und wobei ein Lager (380) mit der Trennplatte (38) verbunden ist und an der Röhre (341) montiert ist.

7. Elektrisches Rad nach Anspruch 6, wobei die Zentraleinheit (32) eine erste befestigte Achse (320) und eine zweite befestigte Achse (321) aufweist, die mit der ersten befestigten Achse (320) verbunden ist, wobei die erste befestigte Achse (320) sich durch die Röhre (341) erstreckt und wobei der Planetenradrahmen (36) an der zweiten befestigten Achse (321) montiert ist, und wobei das Lager (371) an der Kappe (37) an der zweiten befestigten Achse (321) montiert ist.

8. Elektrisches Rad nach Anspruch 1, wobei der Nabenmotor (30) ein Gehäuse (31), das darauf ausgelegt ist, an der Felge (10) befestigt zu werden, einen Zahnkranz (35), ein Sonnenrad (342), einen Planetenradrahmen (36) und eine Vielzahl Planetenräder (362) aufweist, wobei sich die Zentraleinheit (32) entlang einer Achse des Gehäuses (31) erstreckt und eine erste befestigte Achse (320), eine zweite befestigte Achse (321) und einen Schaft (322) aufweist, wobei die erste befestigte Achse (320) ein erstes Ende und ein zweites Ende aufweist, wobei das erste Ende der ersten befestigten Achse (320) darauf ausgelegt ist, an dem Fahrzeugrahmen (60) befestigt zu werden, wobei ein erstes Lager (313) zwischen der ersten befestigten Achse (320) und dem Gehäuse (31) angeordnet ist, wobei das Gehäuse (31) relativ zu der ersten befestigten Achse (320) drehbar ist, wobei eine Spuleneinheit (330) des Motors (33) an dem Gehäuse (31) befestigt ist oder wobei der Zahnkranz (35) in dem Gehäuse (31) befestigt ist, wobei die zweite befestigte Achse (321) ein erstes Ende und ein zweites Ende aufweist, wobei das zweite Ende der zweiten befestigten Achse (321) darauf ausgelegt ist, an dem Fahrzeugrahmen (60) befestigt zu werden, wobei ein zweites Lager (371) zwischen der zweiten befestigten Achse (321) und dem Gehäuse (31) angeordnet ist, wobei das Gehäuse (31) relativ zu der zweiten befestigten Achse (321) drehbar ist, wobei der Schaft (322) gleichachsig zu der ersten und der zweiten befestigten Achse (320) (321) angeordnet ist, wobei der Schaft (322) ein erstes Ende und ein zweites Ende aufweist, wobei das Sonnenrad (342) und eine Magneteinheit (340) des Stators (34) an dem Schaft (322) montiert sind, wobei ein drittes Lager (314) und ein viertes Lager (380) zwischen dem Schaft (322) und dem Gehäuse (31) angeordnet sind, wobei das Gehäuse (31) relativ zu dem Schaft (322) drehbar ist, wobei der Schaft (322) gleichachsig zu der ersten befestigten Achse (320) und der zweiten befestigten Achse (321) angeordnet ist, wobei der Schaft (322) relativ zu der ersten befestigten Achse (320) und der zweiten befestigten Achse (321) drehbar ist, wobei der Planetenradrahmen (36) gleichachsig und drehbar an der Zentraleinheit (32) montiert ist, wobei der Planetenradrahmen (36) relativ zu der Zentraleinheit (32) nur in einer Richtung drehbar ist und eine erste Endfläche und eine zweite Endfläche aufweist, wobei die erste Endfläche die Vielzahl Planetenräder (362) aufweist, die drehbar mit dieser verbunden sind, wobei die Planetenräder (362) mit dem Zahnkranz (35) und dem Sonnenrad (342) in Eingriff stehen.

9. Elektrisches Rad nach Anspruch 8, wobei die zweite Endfläche des Planetenradrahmens (36) eine erste Hülse (364) aufweist, die sich axial davon erstreckt, wobei die erste Hülse (364) um das erste Ende der zweiten befestigten Achse (321) herum angeordnet ist und ein damit verbundenes Ein-Weg-Lager (373) aufweist, wobei der Planetenradrahmen (36) relativ zu der zweiten befestigten Achse (321) und der Zentraleinheit (32) durch das Ein-Weg-Lager (373) nur in einer Richtung drehbar ist.

10. Elektrisches Rad nach Anspruch 8, wobei das erste Ende der zweiten befestigten Achse (321) und das zweite Ende des Schaftes (322) durch ein fünftes Lager (372) miteinander verbunden sind.

11. Elektrisches Rad nach Anspruch 10, wobei das erste Ende der zweiten befestigten Achse (321) eine damit verbundene zweite Hülse (323) aufweist, wobei die zweite Hülse (323) um das zweite Ende des Schaftes (322) herum angeordnet ist, wobei das fünfte Lager (372) zwischen der zweiten Hülse (323) und dem zweiten Ende des Schaftes (322) angeordnet ist.

12. Elektrisches Rad nach Anspruch 8, wobei ein erstes Verschlusselement (37) und ein zweites Verschlusselement (370) an zwei Enden des Gehäuses (31) angeordnet sind, wobei eine Trennplatte (38) in einem mittleren Bereich des Gehäuses (31) angeordnet ist, wobei das erste Verschlusselement (37) einen darin befestigten ersten Lagersitz (39) aufweist, wobei der erste Lagersitz (39) einen ersten Raum (390) aufweist, der das erste und das dritte Lager (313) (314) aufnimmt, wobei das zweite Verschlusselement (370) das damit verbundene zweite Lager (371) aufweist, wobei die Trennplatte (38) das damit verbundene vierte Lager (380) aufweist, wobei das erste Lager (313) an der ersten befestigten Achse (320) montiert ist, wobei das zweite Lager (371) an der zweiten befestigten Achse (321) montiert ist, wobei das dritte Lager (314) und das vierte Lager (380) an dem Schaft (323) montiert sind, wobei die Magneteinheit (43) zwischen dem dritten Lager (314) und dem vierten Lager (380) angeordnet ist, und wobei das vierte Lager (380) zwischen der Magneteinheit (340) und dem Sonnenrad (342) angeordnet ist.

13. Elektrisches Rad nach Anspruch 12, wobei der erste Lagersitz (39) eine dritte Hülse (393) aufweist, die sich von einem von dessen Enden erstreckt, wobei die dritte Hülse (393) ein offenes Ende umfasst, um den ersten Raum (390) auszubilden, wobei der erste Raum (390) das erste Lager (313), eine Beilagscheibe (315) und das dritte Lager (314) aufnimmt, wobei die Beilagscheibe (315) das erste Lager (313) von dem dritten Lager (43) trennt.

## Revendications

1. Roue électrique pour véhicules électriques comprenant :
une jante (10) ayant un pneu (20) relié à une périphérie extérieure de celle-ci et de multiples éléments de connexion (11) reliés à un intérieur de la jante (10), chacun des multiples éléments de connexion (11) étant un élément semblable à une planche et ayant une première extrémité (110) qui est fixée à l'intérieur de la jante (10) et une seconde extrémité (111) qui s'étend vers un centre de la jante (10) et reliées l'une à l'autre pour former une première portion de fixation (112) qui est une portion en forme d'étoile et
un moteur de moyeu (30) situé au centre de la jante (10) et ayant une unité centrale (32), un rotor (33) et un stator (34), l'unité centrale (32) étant située sur un axe central de la jante (10) et deux extrémités de l'unité centrale (32) étant adaptées pour être fixées au châssis d'un véhicule (60), la jante (10) ayant des batteries multiples (40) et un dispositif de commande (50) relié à celles-ci, le dispositif de commande (50) recevant un signal de commande sans fil et
générant un signal de commande pour commander la pile (40) pour fournir de l'énergie au moteur de moyeu (30) et pour permettre au rotor (33) de tourner autour du stator (34) et pour permettre à la jante de tourner autour de l'unité centrale (32),
les multiples batteries (40) étant reliées respectivement à de multiples boîtes (41), chaque boîte (41) ayant de multiples batteries (40) qui y sont logées, chaque boîte (41) étant fixée à un élément de connexion (11) de la jante (10) et étant située à l'extérieur du moteur de moyeu (30), chaque élément de connexion (11) ayant un évidement (114) défini dans une surface de celui-ci et la boîte (41) étant logée dans l'évidement (114), les boîtes (41) étant reliées l'une à l'autre pour former une combinaison en forme d'étoile et un trou circulaire (42) étant défini dans un centre de la combinaison en forme d'étoile, le moteur de moyeu (30) traversant le trou circulaire (42), les boîtes (41) étant situées respectivement dans des directions radiales de la jante (10).

2. Roue électrique selon la revendication 1, des fils reliés électriquement entre le moteur de moyeu (30) et les batteries (40) étant prévus, les fils ne s'étendant pas dans l'unité centrale (32) et étant reliés directement entre les batteries (40) et le moteur de moyeu (30).

3. Roue électrique selon la revendication 1, la première portion de fixation (112) positionnant le moteur de moyeu (30) et ayant un premier trou (113) dans un centre de celle-ci, l'unité centrale (32) traversant le premier trou (113).

4. Roue électrique selon la revendication 1, un couvercle en forme d'étoile (12) étant relié à l'intérieur de la jante (10) et étant relié aux éléments de connexion (11) de manière à fermer hermétiquement les évidements (114), le couvercle (12) ayant une seconde portion de fixation (120) à un centre de celui-ci et le moteur de moyeu (30) étant fixé à la seconde portion de fixation (120), la seconde portion de fixation (120) ayant un second trou (121) défini en la traversant de manière centrale et l'unité centrale (32) traversant le second trou (121).

5. Roue électrique selon la revendication 1, le moteur de moyeu (30) comprenant un carter (31), une couronne (35), un planétaire (342), un châssis d'engrenages planétaires (36) et de multiples engrenages planétaires (362), le stator (34) comprenant un tube (341) et une unité magnétique (340), le tube (341) comprenant une première extrémité et une seconde extrémité qui est située opposée à la première extrémité, le tube (341) étant monté rotatif sur une portion centrale de l'unité centrale (32), l'unité magnétique (340) étant fixée à un extérieur d'une portion centrale du tube (341), le rotor (33) comprenant une unité de bobine (330) qui est fixée à un intérieur d'un boîtier (31) et située autour de l'unité magnétique (340), un planétaire (342) étant relié à la première extrémité du tube (341), une couronne (35) étant fixée au boîtier (31), l'unité centrale (32) ayant un châssis d'engrenages planétaires (36) qui y est relié avec de multiples engrenages planétaires (362), les engrenages planétaires (362) étant situés autour du planétaire (342) à un angle central plat, les engrenages planétaires (362) étant situés dans le côté de la couronne (35) et en prise avec le planétaire (342) et la couronne (35).

6. Roue électrique selon la revendication 5, le carter (31) ayant une portion fermée (310) à une première extrémité de celui-ci et une ouverture (311) étant définie dans une seconde extrémité du carter (31), deux paliers (313, 314) étant reliés de manière coaxiale à la portion fermée (310), l'un des deux paliers (313) étant monté sur l'unité centrale (32) et l'autre des deux paliers (314) étant monté sur le tube (341), un capuchon (37) étant monté sur l'ouverture (311) et un palier (371) étant relié au capuchon (37), le palier (371) étant monté sur l'unité centrale (32), une séparation (38) étant située dans le boîtier (31), la séparation (38) et la portion fermée (310) définissant une première chambre (381) entre deux, la séparation (38) et le capuchon (37) définissant une seconde chambre (382) entre deux, le planétaire (342), le châssis d'engrenages planétaires (36), les engrenages planétaires (362) et la couronne (35) étant logées dans la seconde chambre (382), le rotor (33) et le stator (34) étant logés dans la première chambre (381), un palier (380) étant relié à la séparation (38) et monté sur le tube (341).

7. Roue électrique selon la revendication 6, l'unité centrale (32) comprenant un premier axe fixe (320) et un second axe fixe (321) qui est relié au premier axe fixe (320), le premier axe fixe (320) traversant le tube (341) et le châssis d'engrenages planétaires (36) étant monté sur le second axe fixe (321), le palier (371) sur le capuchon (37) étant monté sur le second axe fixe (321).

8. Roue électrique selon la revendication 1, le moteur de moyeu (30) comprenant un carter (31) qui est adapté pour être fixé à la jante (10), une couronne (35), un planétaire (342), un châssis d'engrenages planétaires (36) et de multiples engrenages planétaires (362), l'unité centrale s'étendant le long d'un axe du carter (31) et ayant un premier axe fixe (320), un second axe fixe (321) et un arbre (322), le premier axe fixe (320) ayant une première extrémité et une seconde extrémité, la première extrémité du premier axe fixe (320) étant adaptée pour être fixée au châssis du véhicule (60), un premier palier (313) étant situé entre le premier axe fixe (320) et le carter (31), le carter (31) étant rotatif par rapport au premier axe fixe (320), une unité de bobine (330) du rotor (33) étant fixée sur le carter (31), une couronne (35) étant fixée dans le carter (31), le second axe fixe (321) ayant une première extrémité et une seconde extrémité, la seconde extrémité du second axe fixe (321) étant adaptée pour être fixée au châssis du véhicule (60), un second palier (371) étant situé entre le second axe fixe (321) et le carter (31), le carter (31) étant rotatif par rapport au second axe fixe (321), l'arbre (322) étant situé de manière coaxiale avec le premier et le second axe fixes (320) (321), l'arbre (322) ayant une première et une seconde extrémité, le planétaire (342) et une unité magnétique (340) du stator étant montés sur l'arbre (322), un troisième palier (314) et un quatrième palier (380) étant situés entre l'arbre (322) et le carter (31), le carter (31) étant rotatif par rapport à l'arbre (322), l'arbre (322) étant situé de manière coaxiale avec le premier axe fixe (320) et le second axe fixe (321), l'arbre (322) étant rotatif par rapport au premier axe fixe (320) et au second axe fixe (321), le châssis d'engrenages planétaires (36) étant monté de manière coaxiale et rotative sur l'unité centrale (32), le châssis d'engrenages planétaires (36) étant rotatif par rapport à l'unité centrale (32) seulement dans une direction et ayant une première surface d'extrémité et une seconde surface d'extrémité, la première surface d'extrémité ayant de multiples engrenages planétaires (362) reliés en rotation à celle-ci, les engrenages planétaires (362) étant en prise avec la couronne (35) et le planétaire.

9. Roue électrique selon la revendication 8, la seconde surface d'extrémité du châssis d'engrenages planétaires (36) ayant une première douille (364) qui s'étend de manière axiale à partir de celui-ci et la première douille (364) étant située autour de la première extrémité du second axe fixe (321) et ayant un palier unidirectionnel (373) qui y est relié, le châssis d'engrenages planétaires (36) étant rotatif par rapport au second axe fixe (321) et l'unité centrale (32) dans seulement une direction par le palier unidirectionnel (373).

10. Roue électrique selon la revendication 8, la première extrémité du second axe fixe (321) et la seconde extrémité de l'arbre (322) étant reliée l'une à l'autre par un cinquième palier (372).

11. Roue électrique selon la revendication 10, la première extrémité du second axe fixe (321) ayant une seconde douille (323) qui y est reliée, la seconde douille (323) étant située autour de la seconde extrémité de l'arbre (322), le cinquième palier (372) étant situé entre la seconde douille (323) et la seconde extrémité de l'arbre (322).

12. Roue électrique selon la revendication 8, un premier élément de fermeture (37) et un second élément de fermeture (370) étant situés sur deux extrémités du carter (31), une séparation (38) étant située dans une portion centrale du carter (31), le premier élément de fermeture (37) ayant un premier logement de palier qui y est fixé, le premier logement de palier (39) ayant une première chambre (390) qui loge le premier et le troisième palier (313) (314), le second élément de fermeture (370) ayant le second palier (371) qui y est relié, la séparation (38) ayant le quatrième palier (380) qui y est relié, le premier palier (313) étant monté sur le premier axe fixe (320) et le second palier (371) étant monté sur le second axe fixe (321), le troisième palier (314) et le quatrième palier (380) étant montés sur l'arbre (322), l'unité magnétique (340) étant située entre le troisième palier (314) et le quatrième palier (380), le quatrième palier (380) étant situé entre l'unité magnétique (340) et le planétaire (342).

13. Roue électrique selon la revendication 12, le premier logement de palier (39) ayant une troisième douille (393) qui s'étend à partir d'une extrémité de celui-ci, la troisième douille (393) comprenant une extrémité ouverte de manière à former la première chambre (390), la première chambre (390) recevant le premier palier (313), un joint d'étanchéité (315) et le troisième palier (314), le joint d'étanchéité (315) séparant le premier palier (313) du troisième palier (314).
